# EUROPEAN PATENT SPECIFICATION

(11) **EP 1 717 925 B1**
(45) Date of publication and mention of the grant of the patent: **24.06.2009**
(21) Application number: 06112740.3
(22) Date of filing: 19.04.2006
(51) Int. Cl.: H02J 7/00, H01M 10/46

(54) **Electric protection system for rechargeable battery packages**
Elektronisches Schutzsystem für wiederaufladbaren Batterienverpackungen
Système de protection électrique pour emballages des batteries rechargables

(30) Priority: 29.04.2005 IT VI20050126
(43) Date of publication of application: 02.11.2006
(73) Proprietor: Beghelli S.p.A., 40050 Monteveglio, Bologna (IT)
(72) Inventor: Beghelli, Gian Pietro, 40050, Monteveglio(Bologna) (IT)
(74) Representative: Iannone, Carlo Luigi

(56) References cited:
- EP-A2- 0 129 965
- GB-A- 2 075 247
- US-A- 5 436 089
- US-A- 5 929 606
- US-A1- 2003 194 603

## Description

The present invention relates, in general, to blister packages for rechargeable batteries incorporating the device for the recharging and charge maintenance of the batteries.

In particular, the invention relates to an electric protection system for said packages.

It is known that rechargeable batteries have the characteristic of being able to preserve energy for relatively short periods of time.

The typical self-discharging time of an Ni-Cd or Ni-MH battery is in fact a few months and only rarely and under high storage temperature conditions does it reach 12 months.

Also considering the fact that the times necessary for the provisioning of batteries on the part of sales points, in a modern goods distribution system, are becoming increasingly more limited, the final customer is almost always obliged to buy flat batteries and must therefore recharge them before use.

Document GB 2075247 discloses a blister package of rechargeable batteries with a fusible track which melts in the case of accidental short circuit between the end-contact terminals of the batteries.

Within the above-mentioned demands, a main objective of the present invention is to provide an electric protection system for packages of rechargeable batteries, which allows the sale of packages (blisters) of already charged batteries, obtaining a convenient handling of the charging operations and maintaining of the battery charge directly in the sales points, with no danger of possible short circuits, which may occur, for example, during transportation.

Another objective of the present invention is to provide a low-cost electric protection system for packages of rechargeable batteries, which allows electrical access to the terminals of the packaged batteries, without having to open the blister packaging and thus enabling the sale of a "fresh" product to the client, with all the energy available right from the start.

The invention relates to a blister package according to claim 1.

Further objectives and advantages of the present invention will appear more evident from the following description which refers to an illustrative and non-limiting embodiment of the electric protection system for packages of rechargeable batteries, according to the invention and from the enclosed drawings, in which:

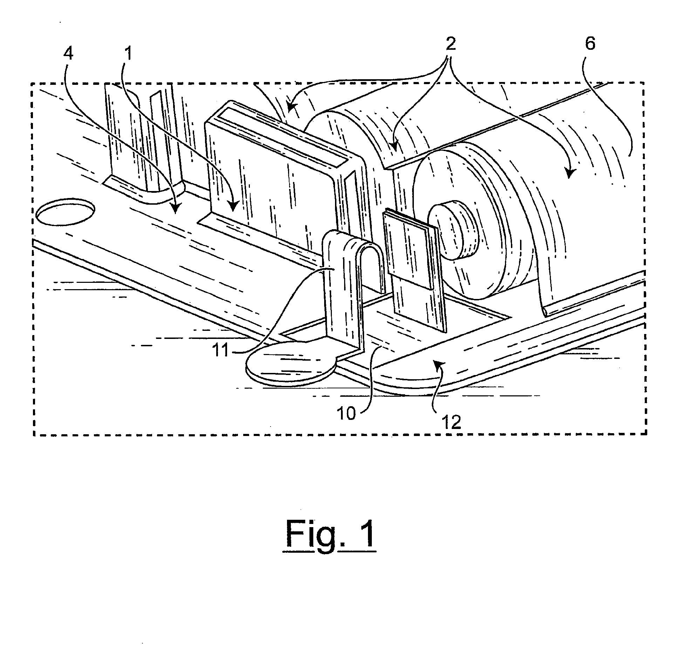

* figure 1 shows a partial perspective view of the electric protection system applied to a blister package for rechargeable batteries, according to the present invention;
* figure 2 is a plan view from above of a miniaturized printed circuit which is a component part of the electric protection system for rechargeable batteries, according to the present invention;
* figure 3 is a plan view from below of the miniaturized printed circuit of figure 2, according to the present invention.

With reference to the above figures, the battery package, preferably made in blister form, is generically indicated by 1 and can contain the most widely used types of rechargeable batteries 2, such as, for example, 1.2 Volt batteries of the AA type, 1.2 Volt batteries of the AAA type, or 9 Volt batteries.

The blister package 1 also includes a printed board 4, on which the batteries 2 are placed, containing the manufacturer's indications, the rating of the batteries, and instructions for use; the whole unit is finally wrapped in a sheathing 6, made of a thermo-retractable plastic material, which blocks all the elements conferring solidity to the whole set.

The battery terminals are contacted by means of metal springs (not shown in the enclosed figures), which provide the electric connections; in particular, the springs are in contact with the end terminals (positive and negative pole) of the series of batteries 2 and make them accessible on one of the cardboard flaps of the blister package 1.

On this flap, in correspondence with the portion of springs coplanar with the flap itself, there are respective holes on the sheathing 6, so that, by means of an appropriate electric contacting system, it is possible to have access, through these holes, to the batteries 2 for the charging operations.

A recharging and charge-maintenance system is used, in illustrative and non-limiting embodiments of the invention, which, in practice, consists of a charger, which can also act as display of the blister packages 1 (for example inside a shop), having a series of slits, in which the lower flap of each package 1 is inserted.

The charger, in its single or multiple version, i.e. including a series of layers connected to a vertical supporting structure, can also be advantageously used as a display for the blister packages 1 in sales points, so that charged batteries can always be available to the clients.

The insertion of each blister packaging 1 into the slits of the charger is advantageously effected in a compulsory position (created by the length of the slit 18 itself), causing connection to the correct internal terminals of the charger, thus allowing the necessary charge levels for the particular type of battery to be charged, to be automatically selected.

It is therefore possible to use a single charger for recharging and charge-maintenance in the main types of batteries currently used.

In order to allow an efficient recharging of the batteries 2 when the packages 1 are inserted inside the slits of the charger and, at the same time, to enable the packages 1 to be sold without the danger of possible short circuits between the external contacts of the package 1 (which can happen, for example, due to the incapacity of the client, during transportation), the present invention envisages the introduction into the package 1 of an effective electric protection system based on a miniaturized printed circuit 12, on which a suitably dimensioned fusible track is housed.

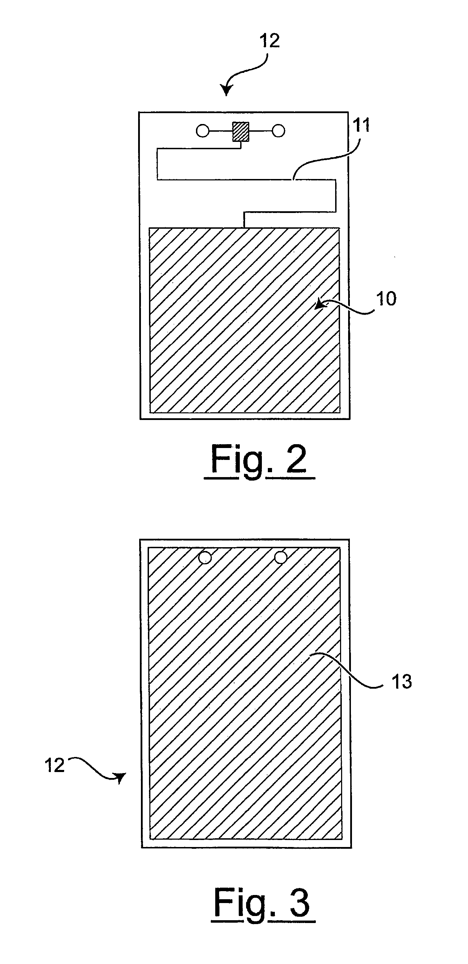

In particular, according to what is illustrated in figures 2 and 3, the printed circuit 12 has, in correspondence with one side, a uniformly metallized portion (of copper) 10 and a fusible track 11, made of a conductive material, whereas the opposite side of the printed circuit 12 is uniformly metallized (portion indicated with 13 in figure 3). The encumbrance dimensions (length, width, thickness) of the printed circuit 12 and the length of the metallized portion 10 vary according to the type of rechargeable batteries 2 present in the packaging 1, as different electric characteristics must subsist for the various types of batteries 2.

For packages of batteries 2 of the AA or 9 Volt type, for example, the internal resistance of the printed circuit 12 is equal to 135 Ω, whereas for packages of batteries 2 of the AAA type, the internal resistance of the printed circuit is equal to 160 Ω.

The fusible track 11 is designed so that it does not burn during the normal recharging of the batteries 2, when these are contained inside blister packages 1 and are subjected to recharging by means of the charger-display described above (the recharging takes place at variable current values ranging from 100 to 500 mAh and for times which can also be prolonged and varying from 10 to 48 hours).

In the case of accidental short circuits between the external contact terminals of the packaging 1 (due, for example, to the incapacity of the client during the transporting of the package 1), in very short times (in the order of a few seconds), the fusible track 11 melts opening the circuit and preventing the release of a discharge current of several Amperes (2-5 A, depending on the model of the batteries contained in the package 1), which could overheat the batteries 2 and create potentially dangerous situations for the client.

In particular, the track 11 melts at a current intensity threshold of 2 A and completes the opening of the circuit within an estimated time range of less than 5 seconds, at a constant current intensity of 5 A.

All of this increases the safety conditions for the user, completely avoiding the risk of explosion or flammability, also bearing in mind that the same rechargeable batteries are in conformance with the regulations in force with respect to electric safety, being equipped with a safety valve which is released when the pressure and/or temperature of the battery reaches levels higher than certain pre-established thresholds.

From the above description, the characteristics of the electric protection system for rechargeable battery packages, which is the object of the present invention, appear evident as also the advantages.

Finally, numerous other variants can obviously be applied to the electric protection system in question, all included in the novelty principles inherent in the inventive idea, and it is also evident that, in the practical embodiment of the invention, the materials, forms and dimensions of the details illustrated can vary according to demands and can be replaced with other equivalent alternatives.

## Claims

1. A blister package (1) of rechargeable batteries (2), which can be used with specific charging devices suitable for the recharging and charge-maintenance of the batteries (2) during their exposure to the public so that clients can buy already charged batteries (2), wherein said blister package (1) comprises a printed board (4) on which said batteries (2) are positioned, said printed circuit (12) including at least one suitably dimensioned fusible track (11), made of a conductive material, which melts in the case of accidental short circuit between said end electric contact terminals of said batteries (2) of the blister package (1), **characterised in that** said printed board (4) and said batteries (2) are wrapped in a sheathing (6) made of a thermo-retractable plastic material, said batteries (2) have end electric contact terminals which are externally accessible on at least one portion of the blister package (1) that is provided for the insertion in at least one suitable recharging housing of a charging device, a miniaturised printed circuit (12) is provided on said sheathing (6) and in correspondence with at least one portion of said blister package (1) facing at least one terminal of at least one of said batteries (2), so that said blister package (1) can be sold without the danger of any possible short circuits.

2. A blister package (1) as claimed in claim 1, **characterised in that** said end electric contact terminals of said batteries (2) are contacted by means of metallic springs, which form electric connections, making said end terminals accessible on said at least one portion of the blister package (1).

3. A blister package (1) as claimed in claim 1, **characterised in that** said fusible track (11) melts at a pre-established current intensity threshold and completes the opening of the circuit in a certain time range.

4. A blister package (1) as claimed in claim 1, **characterised in that** said printed circuit (12) has a uniform metallization in correspondence with a first side (13) facing said sheathing (6), said printed circuit (12) also having at least one metallized portion connected to said fusible track (11) in correspondence with a second side which is opposed to said first side (13).

## Patentansprüche

1. Blisterpackung (1) wieder aufladbarer Batterien (2), die mit speziellen Aufladeeinrichtungen verwendet werden kann, die für das Wiederaufladen und eine Aufrechterhaltung der Ladung der Batterien (2) geeignet sind, während diese der Öffentlichkeit ausgesetzt sind, so dass Kunden bereits aufgeladene Batterien (2) kaufen können, wobei die Blisterpackung (1) eine Leiterplatte (4) umfasst, auf der die Batterien (2) angeordnet sind, wobei der gedruckte Schaltkreis (12) zumindest eine geeignet dimensionierte leicht schmelzbare Spur (11) aufweist, die aus einem leitendem Material hergestellt ist, das in dem Fall eines unbeabsichtigten Kurzschlusses zwischen den elektrischen Endkontaktanschlüssen der Batterien (2) der Blisterpakkung (1) schmilzt,
**dadurch gekennzeichnet, dass**
die Leiterplatte (4) und die Batterien (2) in eine Ummantelung (6) eingehüllt sind, die aus einem unter Wärme schrumpfenden Kunststoffmaterial hergestellt ist, wobei die Batterien (2) elektrische Endkontaktanschlüsse aufweisen, die an zumindest einem Abschnitt der Blisterpackung (1), der für das Einschieben in zumindest ein geeignetes Wiederaufladungsgehäuse einer Aufladeeinrichtung vorgesehen ist, von außen zugänglich sind, wobei eine miniaturisierter gedruckter Schaltkreis (12) auf der Ummantelung (6) und in Verbindung mit zumindest einem Abschnitt der Blisterpackung (1) vorgesehen ist, der zumindest einem Anschluss zumindest einer der Batterien (2) zugewandt ist, sodass die Blisterpackung (1) ohne die Gefahr irgendeines möglichen Kurzschlusses verkauft werden kann.

2. Blisterpackung (1) nach Anspruch 1,
**dadurch gekennzeichnet, dass**
die elektrischen Endkontaktanschlüsse der Batterien (2) mittels metallischer Federn kontaktiert sind, welche elektrische Verbindungen bilden, wodurch die Endanschlüsse an dem zumindest einen Abschnitt der Blisterpackung (1) zugänglich gemacht werden.

3. Blisterpackung (1) nach Anspruch 1,
**dadurch gekennzeichnet, dass**
die leicht schmelzbare Spur (11) bei einem vorbestimmten Stromintensitäts-Schwellenwert schmilzt und die Öffnung des Schaltkreises in einem bestimmten Zeitbereich vervollständigt.

4. Blisterpackung (1) nach Anspruch 1,
**dadurch gekennzeichnet, dass**
der gedruckte Schaltkreis (12) eine gleichmäßige Metallisierung in Verbindung mit einer ersten Seite (13) aufweist, die der Ummantelung (6) zugewandt ist, wobei der gedruckte Schaltkreis (12) auch zumindest einen metallisierten Abschnitt aufweist, welcher mit der leicht schmelzbaren Spur (11) in Verbindung mit einer zweiten Seite verbunden ist, die der ersten Seite (13) entgegengesetzt ist.

## Revendications

1. Emballage-coque (1) pour batteries rechargeables (2), pouvant être utilisées avec des dispositifs spécifiques de charge adaptés à la recharge et au maintien de la charge des batteries (2) lors de leur présentation au public de façon à ce que des clients puissent acheter des batteries déjà chargées (2), dans lequel ledit emballage-coque (1) comprend une carte de circuit imprimé (4) sur laquelle sont positionnées lesdites batteries (2), ledit circuit imprimé (12) comprenant au moins une piste fusible (11) dimensionnée de façon adaptée, constituée d'un matériau conducteur, qui fond dans le cas d'un court-circuit accidentel entre lesdites bornes de contact électrique d'extrémité desdites batteries (2) de l'emballage-coque (1), **caractérisé en ce que** ladite carte de circuit imprimé (4) et lesdites batteries (2) sont enveloppées dans un gainage (6) réalisé en une matière plastique thermo-rétractable, lesdites batteries (2) possèdent des bornes de contact électrique d'extrémité qui sont accessibles de façon externe sur au moins une partie de l'emballage-coque (1) qui est prévue pour l'insertion dans au moins un boîtier adapté de recharge d'un dispositif de charge, un circuit imprimé miniaturisé (12) est prévu sur ladite gaine (6) et en correspondance avec au moins une partie dudit emballage-coque (1) tournée vers au moins une borne d'au moins une desdites batteries (2), de façon à ce que ledit emballage-coque (1) puisse être vendu sans danger d'un quelconque court-circuit possible.

2. Emballage-coque (1) selon la revendication 1, **caractérisé en ce que** lesdites bornes de contact électrique d'extrémité desdites batteries (2) sont mises en contact au moyen de ressorts métalliques, qui forment des connexions électriques, rendant lesdites bornes d'extrémité accessibles sur ladite au moins une partie de l'emballage-coque (1).

3. Emballage-coque (1) selon la revendication 1, **caractérisé en ce que** ladite piste fusible (11) fond à un seuil préétabli d'intensité de courant et achève l'ouverture du circuit dans un certain intervalle de temps.

4. Emballage-coque (1) selon la revendication 1, **caractérisé en ce que** ledit circuit imprimé (12) présente une métallisation uniforme en correspondance avec un premier côté (13) tourné vers ladite gaine (6), ledit circuit imprimé (12) possédant en outre au moins une partie métallisée connectée à ladite piste fusible (11) en correspondance avec un second côté qui est opposé audit premier côté (13).
